# EUROPÄISCHE PATENTANMELDUNG

(11) **EP 3 067 843 A1**
(43) Veröffentlichungstag der Anmeldung: **14.09.2016**
(21) Anmeldenummer: 15158310.1
(22) Anmeldetag: 09.03.2015
(51) Int. Cl.: G06Q 10/08, A45C 13/42

(54) **Verfahren und System zum Identifizieren von Fluggepäck**

(71) Anmelder: BAG2GO GmbH, 20354 Hamburg (DE)
(72) Erfinder: Morszeck, Dieter, 50829 Köln (DE); Reh, Jan, 20354 Hamburg (DE)
(74) Vertreter: dompatent von Kreisler Selting Werner - Partnerschaft von Patent- und Rechtsanwälten mbB

(57) **Zusammenfassung**

Bei einem Verfahren zum Identifizieren eines Fluggepäcks, insbesondere eines Koffers, sind folgende Schritte vorgeschrieben:
- Aktivieren einer in dem Fluggepäck integrierten, als elektronischer tag ausgeführten, elektronischen Displayeinrichtung zum Versetzen des Displays in Empfangsbereitschaft,
- Übertragen von für einen Flug notwendigen Flug- und Personendaten von einer Eincheckeinrichtung an die Displayeinrichtung,
grafisches Darstellen der Flug- und Personendaten auf einer Anzeigefläche der Displayeinrichtung.

## Beschreibung

Die Erfindung betrifft ein Verfahren und ein System zum Identifizieren von Fluggepäck nach Anspruch 1 bzw. nach Anspruch 12.

Es sind Verfahren bzw. Systeme zum Identifizieren von Fluggepäck, insbesondere Koffern, bekannt, bei denen das Fluggepäck mittels einer Eincheckeinrichtung, insbesondere Handy, Computer, Check-In Schalter oder Check-In Automat, eingecheckt werden. Für das Fluggepäck werden dann sogenannte "baggage tags" ausgedruckt und an dem Fluggepäck befestigt. Auf den baggage tags sind für den Flug notwendige Flug- und Personendaten dargestellt. Das mit dem baggage tag versehene Gepäckstück kann dann an einer Gepäckabgabeeinrichtung, insbesondere einem Gepäckabgabeschalter, einem Check-In Schalter mit Gepäckabgabe oder einem Self-Service Drop Off Schalter, abgegeben werden. Es besteht jedoch zunehmend Bedarf das Verfahren zum Identifizieren von Fluggepäck weiter zu automatisieren und zu vereinfachen.

Der Erfindung liegt daher die Aufgabe zugrunde, ein Verfahren und ein System zum Identifizieren von Fluggepäck zu schaffen, das automatisiert und vereinfacht ist.

Zur Lösung dieser Aufgabe dienen die Merkmale der Ansprüche 1 und 12.

Bei einem Verfahren zum Identifizieren eines Fluggepäcks gemäß der vorliegenden Erfindung sind vorteilhafterweise die folgenden Schritte vorgesehen:
- Aktivieren einer in dem Fluggepäck integrierten, als elektronischer tag ausgeführten, elektronischen Displayeinrichtung zum Versetzten des Displays in Empfangsbereitschaft,
- Übertragen von für einen Flug notwendigen Flug- und Personendaten von einer Eincheckeinrichtung an die Displayeinrichtung,
- grafisches Darstellen der Flug- und Personendaten auf einer Anzeigefläche der Displayeinrichtung.

Gemäß dem vorliegenden Verfahren können Flug- und Personendaten auf einer in dem Gepäckstück integrierten, als elektronischer tag ausgeführten Displayeinrichtung dargestellt werden. Auch können Flug- und Personendaten an die Displayeinrichtung übertragen werden. Ferner bietet das Verfahren gemäß der vorliegenden Erfindung den Vorteil, dass die Flug- und Personendaten nicht manipuliert werden können, da diese erst nach Aktivieren der Displayeinrichtung, bei der die Displayeinrichtung in Empfangsbereitschaft gesetzt wird, übertragen werden.

Das vorliegende Verfahren bietet somit den Vorteil, dass die Flug- und Personendaten, die auf dem elektronischen tag, d.h. der Displayeinrichtung, dargestellt sind, genau so sicher vor Manipulierungen geschützt sind wie die auf einem herkömmlichen Papier baggage tag dargestellten Flug- und Personendaten.

Die Displayeinrichtung kann nur innerhalb eines definierten Zeitfensters nach Aktivierung der Displayeinrichtung in Empfangsbereitschaft sein.

Dies hat einen zusätzlichen Sicherheitsvorteil, da die Anzeigefläche auf der Displayeinrichtung bzw. auf dem elektronischen tag, nur innerhalb eines definierten Zeitfensters nach Aktivierung der Displayeinrichtung verändert werden kann.

Die Eincheckeinrichtung kann ein Handy, ein Computer, in Check-In Schalter oder ein Check-In Automat sein. An dieser Eincheckeinrichtung kann ein Fluggast wie bisher üblich einchecken.

Das Fluggepäck mit Displayeinrichtung, auf der die Flug- und Personendaten dargestellt sind, kann an einer Gepäckabgabeeinrichtung abgegeben werden. Die Gepäckabgabeeinrichtung kann ein Gepäckabgabeschalter, ein Check-In Schalter mit Gepäckabgabe oder ein Self-Service Drop off Schalter sein.

Die elektronische Displayeinrichtung kann mittels manueller Betätigung einer an dem Fluggepäck angeordneten Aktivierungseinrichtung aktiviert werden. Auch dies ist ein weiterer Sicherheitsvorteil, da die Aktivierung nur manuell erfolgen kann. Die Aktivierungseinrichtung kann vorzugsweise an der Displayeinrichtung angeordnet sein. Alternativ kann die Aktivierungseinrichtung auch an eine Hand-oder Trollygriff oder Schloss des Fluggepäcks angeordnet sind.

Die Aktivierungseinrichtung kann im Inneren des Fluggepäcks angeordnet sein. Auch dies ist ein weiterer Sicherheitsvorteil, da die Displayeinrichtung nur von dem Inhaber des Fluggepäcks aktiviert werden kann, da nur dieser das Schloss des Fluggepäcks öffnen kann.

Als weitere Alternative könnte auch beispielsweise eine der Displayeinrichtung zugeordnete externe Aktivierungseinrichtung die Displayeinrichtung aktivieren und in Empfangsbereitschaft setzten. Eine solche externe Aktivierungseinrichtung könnte ähnlich wie eine Fernbedienung zum Öffnen eines Autos funktionieren.

Es kann auch vorgesehen sein, dass die Displayeinrichtung nur die Übertragung der Daten von bestimmten bzw. zuvor festgelegten Eincheckeinrichtungen erlaubt. Dies kann insbesondere dann vorgesehen sein, wenn die Aktivierungseinrichtung nicht im Inneren des Gepäckstücks angeordnet ist.

Das Gepäckstück kann an einer Gepäckabgabeeinrichtung eines Flughafens, insbesondere einem Gepäckabgabeschalter, Check-In Schalter mit Gepäckabgabe oder Self-Service Drop Off Schalter, abgegeben werden.

Das Fluggepäck kann einen Gepäckstückkörper aufweisen, in dem die Displayeinrichtung integriert ist.

Die Maße und die Anordnung der grafischen Anzeige der Flug- und Personendaten auf der Anzeigefläche der Displayeinrichtung kann den Maßen und der Anordnung der Anzeige auf einem herkömmlichen Papier baggae tag entsprechen.

Die Displayeinrichtung kann ein stromloses Display aufweisen. Ein stromloses Display ist ein Display, das die Daten dauerhaft ohne Stromzufuhr anzeigen kann. Es wird lediglich Strom für das Ändern der Anzeige benötigt. Solche Displays werden auch bi-stable Displays genannt. Für die Versorgung des Displays mit Strom für das Ändern der Anzeige kann eine Batterie vorgesehen sein.

Die Displayeinrichtung kann im Wesentlichen plan mit der Außenfläche des Fluggepäcks verlaufen.

Die Flug- und Personendaten können mittels Bluetooth übertragen werden. Die Flug- und Personendaten entsprechen den Daten, die auf einem herkömmlichen Papier baggage tag dargestellt werden. Die Flug- und Personendaten können auf der Anzeigefläche der Displayeinrichtung grafisch dargestellt werden. Die grafische Darstellung der Flug- und Personendaten auf der Anzeigefläche der Displayeinrichtung entspricht somit den dargestellten Daten auf einem herkömmlichen Papier baggage tag.

Bei innereuropäischen Flügen können zwei grüne Streifen im definierten Abstand vorzugsweise an den Längskanten der Displayeinrichtung angezeigt werden. Die Anzeigefläche der Displayeinrichtung weist vorzugsweise eine rechteckige Fläche auf, die vorzugsweise zwei Quer- und zwei Längskanten aufweist.

Die auf der Anzeigefläche der Displayeinrichtung angezeigte grafische Darstellung der Flug- und Personendaten kann für die automatische Gepäckbeförderung eingescannt werden. Die auf der Anzeigefläche der Displayeinrichtung dargestellten Flug- und Personendaten können somit genauso wie der herkömmliche Papier baggage tag für die Gepäckbeförderung eingescannt werden. Die automatische Gepäckbeförderung muss somit nicht an den Transport mit Fluggepäck, die eine als elektronischer tag ausgeführte Displayeinrichtung aufweisen, angepasst werden.

Bei der Abgabe des Fluggepäcks kann mittels eines an der Displayeinrichtung angeordneten RFID-Chips automatisch erfasst werden, wobei eine Displayeinrichtung mit angezeigten Flug- und Personendaten vorhanden ist. Auf diese Weise kann das Verfahren zur Abgabe des Fluggepäcks weiter automatisiert werden. Bei einem Self-Service Drop Off Schalter wird beispielsweise automatisch erkannt, dass ein Fluggepäck mit einer Displayeinrichtung und einem darauf angezeigten Flug- und Personendaten vorliegt.

Es kann eine automatische elektronische Bestätigung über die Abgabe des Fluggepäcks versendet werden. Die elektronische Bestätigung kann beispielsweise an die Eincheckeinrichtung gesendet werden.

Das Fluggepäck kann ein Koffer sein und die Displayeinrichtung kann an einer Längsseite des Koffers angeordnet sein, an der auch ein Handgriff angeordnet ist. Auf diese Weise werden die auf der Displayeinrichtung angezeigten Flug- und Personendaten an einer ähnlichen Stelle angeordnet wie der herkömmliche Papier baggage tag, der üblicherweise an dem Handgriff an der Längsseite des Koffers angeordnet wird.

Das Display der Displayeinrichtung kann aus einem Material bestehen, das Kunststoff aufweist und flexibel ist. Auf diese Weise wird verhindert, dass das Display der Displayeinrichtung während der Beförderung des Fluggepäcks zerbricht und der elektronische Tag nicht mehr angezeigt wird.

Gemäß der vorliegenden Erfindung kann ferner ein System zum Identifizieren eines Fluggepäcks, insbesondere eines Koffers, vorgesehen sein, das die folgenden Merkmale aufweist:
- eine Eincheckeinrichtung, auf der für einen Flug notwendige Flug- und Personendaten speicherbar sind,
- ein Fluggepäck mit als elektronischer tag ausgeführte, integrierter Displayeinrichtung,
- eine Aktivierungseinrichtung zum Aktivieren der in dem Fluggepäck integrierten Displayeinrichtung, um diese in Empfangsbereitschaft zu setzen, wobei während der Empfangsbereitschaft Flug- und Personendaten von der Eincheckeinrichtung an die Displayeinrichtung übertragbar ist,
- wobei die Flug- und Personendaten auf einer Anzeigefläche der Displayeinrichtung darstellbar sind.

Die Aktivierungseinrichtung kann am Gepäckstück, vorzugsweise an der Displayeinrichtung, angeordnet sein.

Die Aktivierungseinrichtung kann im Inneren des Gepäckstücks angeordnet sein und manuell betätigbar sein.

Die Aktivierungseinrichtung kann ein an dem Gepäckstück, vorzugsweise an der Displayeinrichtung angeordneter Knopf sein.

Die Aktivierungseinrichtung kann extern von dem Gepäckstück vorgesehen sein.

Im Folgenden werden unter Bezugnahme auf die Zeichnungen Ausführungsbeispiele der Erfindung näher erläutert:
- Fig. 1: zeigt ein System zum Identifizieren von Fluggepäck,
- Fig. 2: zeigt ein alternatives Ausführungsbeispiel,
- Fig. 3: zeigt ein weiteres alternatives Ausführungsbeispiel,
- Fig. 4: zeigt ein weiteres alternatives Ausführungsbeispiel,
- Fig. 5: zeigt die Displayeinrichtung,
- Fig. 6: zeigt eine Draufsicht auf eine Displayeinrichtung eines Fluggepäcks,

- Fig. 7: zeigt eine Gepäckabgabeeinrichtung.

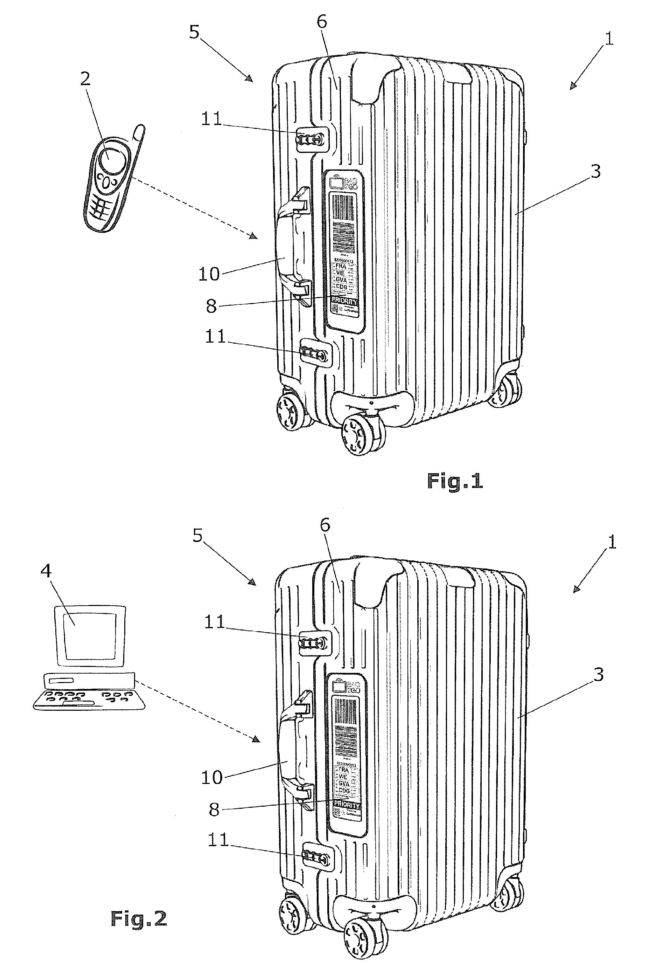

Fig. 1 zeigt ein System 5 zum Identifizieren eines Fluggepäcks 1. Das dargestellte Fluggepäck 1 ist vorzugsweise ein Koffer. Das Fluggepäck 1 weist im dargestellten Ausführungsbeispiel ein Fluggepäckkörper 3 auf. Im Fluggepäckkörper 3 ist eine Displayeinrichtung 8 integriert. Diese Displayeinrichtung 8 ist als elektronischer tag ausgeführt. Ferner ist eine Eincheckeinrichtung 2 vorgesehen. Die in Fig. 1 dargestellte Eincheckeinrichtung 2 ist ein Handy. Die für einen Flug notwendigen Flug- und Personendaten sind auf der Eincheckeinrichtung 2 speicherbar. Diese können auch nur vorübergehend und kurzzeitig auf der Eincheckeinrichtung 2 speicherbar sein. Es ist eine in Fig. 1 nicht dargestellte Aktivierungseinrichtung 40 zum Aktivieren der in dem Fluggepäck 1 integrierten Displayeinrichtung 8 vorgesehen, um die Displayeinrichtung in Empfangsbereitschaft zu setzen. Während der Empfangsbereitschaft können Flug- und Personendaten von der Eincheckeinrichtung 2 an die Displayeinrichtung 8 übertragen werden und auf einer Anzeigefläche 26 der Displayeinrichtung dargestellt werden.

Bei dem Verfahren zum Identifizieren eines Fluggepäcks 1 wird zunächst die in dem Fluggepäck integrierte, als elektronische tag ausgebildete, elektronische Displayeinrichtung 8 aktiviert, um die Displayeinrichtung in Empfangsbereitschaft zu setzen. Dann erfolgt die Übertragung von für den Flug notwendige Flug- und Personendaten von der Eincheckeinrichtung 2 an die Displayeinrichtung 8. Im darauffolgenden Schritt werden die Flug- und Personendaten auf der Anzeigefläche 26 der Displayeinrichtung 8 graphisch dargestellt.

Die Displayeinrichtung 8 ist, wie im dargestellten Ausführungsbeispiel, vorzugsweise an einer Längsseite 6 des Gepäckstücks 1 angeordnet, an der auch ein Handgriff 10 angeordnet ist. Auf diese Weise sind die Flug- und Personendaten, die auf der Displayeinrichtung 8 dargestellt werden, an einer ähnlichen Stelle angeordnet, wie eine herkömmliche Papier-baggage-tag, der üblicherweise an einem Handgriff 10 befestigt wird. Die Aktivierungseinrichtung 40 kann an dem Gepäckstück 1 angeordnet sein. Die Aktivierungseinrichtung kann beispielsweise an dem Handgriff 10, an den Schlössern, an dem Gepäckstückkörper 3 oder an der Displayeinrichtung 8 angeordnet sein. Vorzugsweise ist die Aktivierungseinrichtung 40 im Inneren des Gepäckstücks 1 angeordnet. Dies hat den zusätzlichen Vorteil, dass lediglich der Besitzer des Gepäckstücks 1 Zugriff auf die Aktivierungseinrichtung hat. Auf diese Weise kann kein Unbefugter die Flug- und Personendaten auf der Displayeinrichtung 8 verändern. Die Übertragung der Flug- und Personendaten von der Eincheckeinrichtung 2 auf die Displayeinrichtung 8 kann mittels Bluetooth erfolgen.

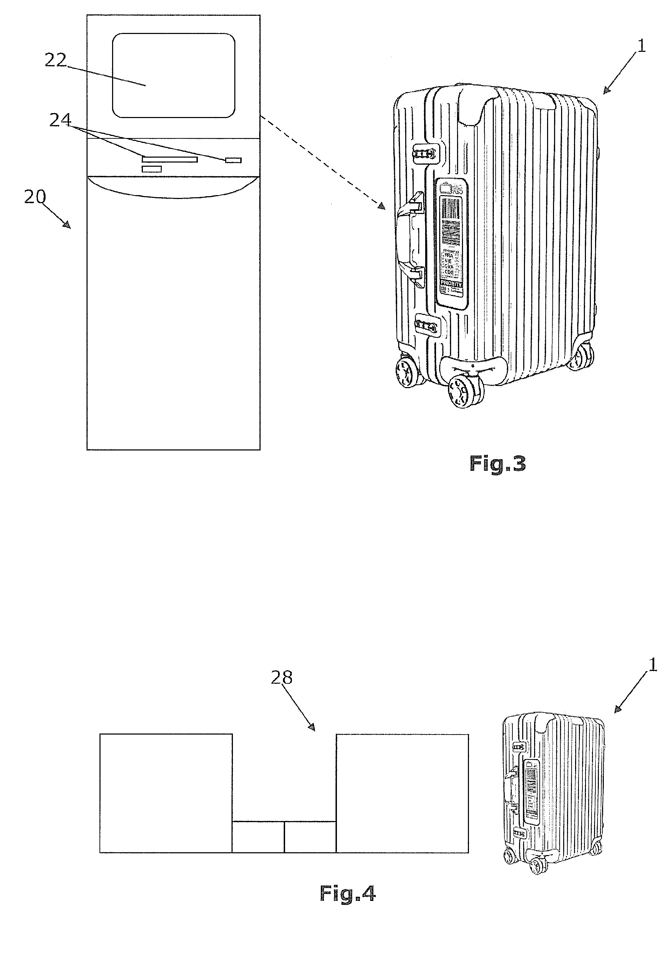

In den Figen 2 - 4 sind weitere alternative Ausführungsbeispiele dargestellt. Diese unterscheiden sich dadurch, dass die Eincheckeinrichtung nicht wie in Figur 1 ein Handy 2 ist, sondern in Fig. 2 ein Computer 4, in Figur 3 ein Check-In-Automat 20, mit dem das Einchecken über die Tastatur 24 und dem Bildschirm 22 erfolgt. In Fig. 4 ist ein Check-In-Schalter 28 dargestellt, bei dem Personal das Gepäckstück 1 eincheckt. Dabei muss jedoch das Personal nicht wie üblich, den Papier-baggage-tag an dem Gepäckstück 1 anbringen sondern kann die Flug- und Personendaten von einem Computer der am Check-In-Schalter 28 angeordnet ist, direkt auf das Gepäckstück 1 übertragen werden.

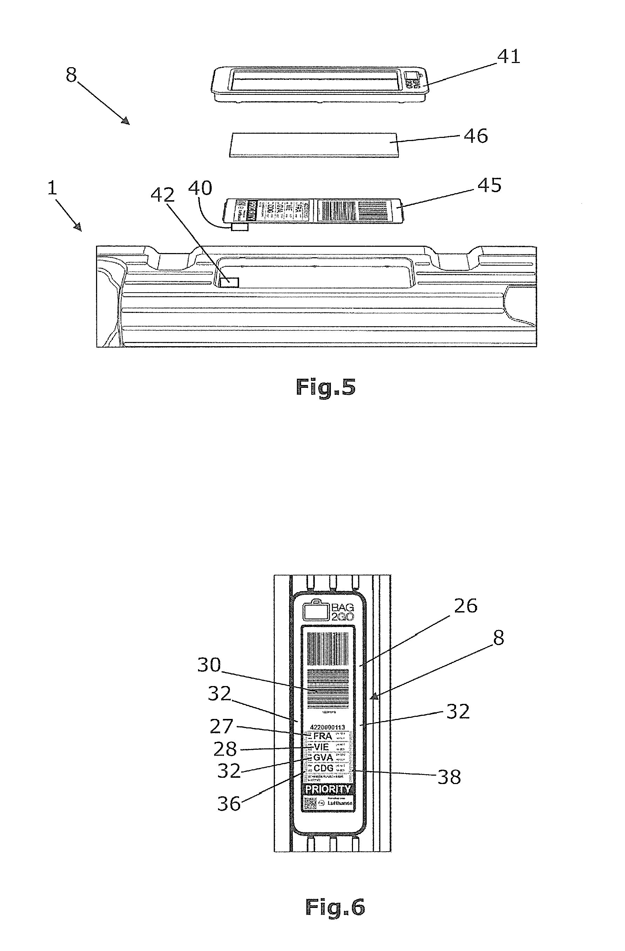

In Fig. 5 ist eine Explosionsdarstellung der Displayeinrichtung 8 mit einem Teil des Gepäckstücks 1 dargestellt. Die Displayeinrichtung 8 weist ein Display 45 auf, das in einem Gehäuse 41 angeordnet ist. Das Display 45 ist mit einem Schutzglas oder einer Schutzfolie 46 bedeckt. Ferner weist die Displayeinrichtung 8 im dargestellten Ausführungsbeispiel die Aktivierungseinrichtung 40 auf. Die Aktivierungseinrichtung 40 kann eine manuell betätigbare Aktivierungseinrichtung sein. Diese Aktivierungseinrichtung 40 kann im dargestellten Ausführungsbeispiel ein Knopf sein, der manuell vom Inneren des Gepäckstücks 1 her betätigt werden kann. Dabei kann die Aktivierungseinrichtung 40 durch ein Loch 41 im Gepäckstückkörper 3 in das Innere des Gepäckstücks reichen. Die Aktivierungseinrichtung 40 kann auch alternativ zu der Anordnung an der Displayeinrichtung 8 auch an dem Handgriff 10 oder an einer anderen Stelle am den Gepäckstückkörper 3 angeordnet sein. Als weitere Alternative ist auch eine externe Aktivierungseinrichtung möglich. Eine solche externe Aktivierungseinrichtung könnte ähnlich wie eine Fernbedienung beim Öffnen eines Autos funktionieren. Es ist auch möglich, dass die Displayeinrichtung 8 nur die Übertragung der Flug-und Personendaten von bestimmten bzw. zuvor festgelegten Eincheckeinrichtungen 2, 4, 26, 28 erlaubt. Dies kann insbesondere dann vorgesehen sein, wenn die Aktivierungseinrichtung 40 nicht im Inneren des Gepäckstücks, wie in Fig. 5 dargestellt, angeordnet ist. Wenn die Aktivierungseinrichtung 40 beispielsweise in der Außenfläche des Gepäckstücks 1 angeordnet ist, so kann diese zwar von Unbefugten aktiviert werden, eine Übertragung der Daten findet jedoch erst statt, wenn die bestimmte oder zuvor festgelegte Eincheckeinrichtung 2, 4, 26, 28 die Daten überträgt.

In Fig. 6 ist die Displayeinrichtung 8 näher dargestellt. Es ist eine Draufsicht auf die Displayeinrichtung 8 und die Anzeigefläche 26 der Displayeinrichtung 8. In der Anzeigefläche 26 der Displayeinrichtung 8 sind die Flug- und Personendaten als Strichcodes 30 und Abkürzungen 27, 28, 32 dargestellt. Ferner kann in der Displayeinrichtung 26 zwei vorzugsweise an den Längskanten 32 angeordnete grüne Streifen 36, 38 aufweisen. Diese grünen Streifen 36, 38 können insbesondere bei Innereuropäischen Flügen angezeigt werden. Das Display 45 der Displayeinrichtungen 8 ist vorzugsweise ein stromloses Display. Dies bedeutet, dass das Display 45 kein Strom zum dauerhaften Anzeigen der Flug- und Personendaten benötigt. Es wird lediglich Strom beim Ändern des Angezeigten benötigt. Dafür kann die Displayeinrichtung 8 eine Batterie 44 aufweisen.

Eine manuelle Aktivierungseinrichtung hat den zusätzlichen Vorteil, dass bei einem stromlosen Display die Displayeinrichtung 8 erst nach Betätigen der Aktivierungseinrichtung in Empfangsbereitschaft gesetzt wird und nur in dieser Zeit Strom benötigt.

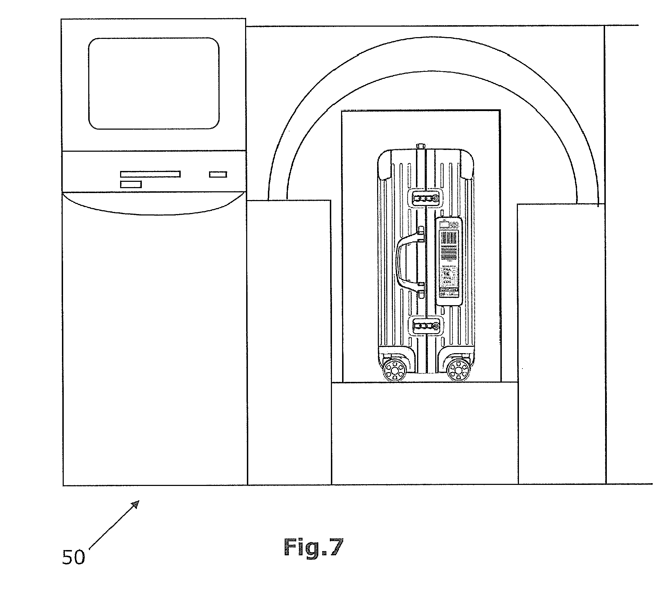

In Fig. 7 ist eine Gepäckabgabeeinrichtung 50 dargestellt. Im dargestellten Ausführungsbeispiel in Figur 7 ist ein Self-Drop-Off-Schalter dargestellt. Bei diesem Schalter kann der Fluggast das Gepäckstück selbst abgeben. Bisher war es dafür nötig, dass ein herkömmlicher Papier-baggage-tag ausgedruckt wird und an dem Gepäckstück von dem Fluggast angebracht werden muss. Das vorliegende System und das vorliegende Verfahren haben den Vorteil, dass die Abgabe des Fluggepäcks wesentlich vereinfacht wird, da die Flug- und Personendaten bereits zuvor von dem Fluggast selbst auf die Displayeinrichtung übertragen werden kann oder direkt vor Ort die Übertragung elektronisch erfolgt. Ein umständliches Anbringen des Klebestreifens des Papier-baggage-tags ist nicht nötig. Der Drop-Off-Schalter kann mittels eines in der Displayeinrichtung angeordneter RFID-Chip automatisch erkennen, dass eine Displayeinrichtung mit angezeigten Flug- und Personendaten aufgelegt worden ist. Alternativ kann die Scaneinrichtung des Self-Drop-Off-Schalters die Anzeigefläche 26 der Displayeinrichtung 8 scannen, um zu erkennen, dass eine Displayeinrichtung mit angezeigten Flug- und Personendaten in dem Fluggepäck 1 angeordnet ist.

## Patentansprüche

1. Verfahren zum Identifizieren eines Fluggepäcks, insbesondere eines Koffers, durch
- Aktivieren einer in dem Fluggepäck integrierten, als elektronischer tag ausgeführten, elektronischen Displayeinrichtung zum Versetzen des Displays in Empfangsbereitschaft,
- Übertragen von für einen Flug notwendigen Flug- und Personendaten von einer Eincheckeinrichtung an die Displayeinrichtung,
- grafisches Darstellen der Flug- und Personendaten auf einer Anzeigefläche der Displayeinrichtung.

2. Verfahren nach Anspruch 1, **dadurch gekennzeichnet, dass** die Displayeinrichtung nur innerhalb eines definierten Zeitfensters nach Aktivierung der Displayeinrichtung in Empfangsbereitschaft ist.

3. Verfahren nach Anspruch 1 oder 2, **dadurch gekennzeichnet, dass** die elektronische Eincheckeinrichtung ein Handy, ein Computer, ein Check-In-Schalter oder ein Check-In Automat ist.

4. Verfahren nach einem der Ansprüche 1 bis 3, **dadurch gekennzeichnet, dass** die elektronische Displayeinrichtung mittels manueller Betätigung einer an dem Fluggepäck angeordneten Aktivierungseinrichtung aktiviert wird.

5. Verfahren nach Anspruch 4, **dadurch gekennzeichnet, dass** die Aktivierungseinrichtung im Inneren des Fluggepäcks angeordnet ist.

6. Verfahren nach einem der Ansprüche 1 bis 5, **dadurch gekennzeichnet, dass** die Maße und die Anordnung der grafischen Anzeige der Flug- und Personendaten auf der Anzeigefläche der Displayeinrichtung den Maßen und der Anordnung der Anzeige der Flug- und Personendaten auf einem herkömmlichen Papier tag entspricht.

7. Verfahren nach einem der Ansprüche 1 bis 6, **dadurch gekennzeichnet**, die Displayeinrichtung ein stromloses Display aufweist.

8. Verfahren nach einem der Ansprüche 1 bis 7, **dadurch gekennzeichnet, dass** die Flug- und Personendaten mittels Bluetooth übertragen werden.

9. Verfahren nach einem der Ansprüche 1 bis 8, **dadurch gekennzeichnet, dass** zwei grüne Steifen in definierten Abschnitten vorzugsweise an Längskanten der Displayeinrichtung angezeigt werden.

10. Verfahren nach einem der Ansprüche 1 bis 9, **dadurch gekennzeichnet, dass** die auf der Anzeigefläche der Displayeinrichtung angezeigte grafische Darstellung der Flug und Personendaten für die automatische Gepäckbeförderung eingescannt werden.

11. Verfahren nach einem der Ansprüche 1 bis 10, **dadurch gekennzeichnet, dass** bei Abgabe des Fluggepäcks mittels eines an der Displayeinrichtung angeordneten RFID Chips automatisch erfasst wird, ob eine Displayeinrichtung mit einem elektronischen tag vorhanden ist.

12. System zum Identifizieren eines Fluggepäcks, insbesondere eines Koffers, mit
- einer Eincheckeinrichtung, auf der für einen Flug notwendige Flug-und Personendaten speicherbar sind,
- dem Fluggepäck mit als elektronischer tag ausgeführte, integrierter Displayeinrichtung,
- einer Aktivierungseinrichtung zum Aktivieren der in dem Fluggepäck integrierten Displayeinrichtung, um diese in Empfangsbereitschaft zu setzen, wobei während der Empfangsbereitschaft Flug-und Personendaten von der Eincheckeinrichtung an die Displayeinrichtung übertragbar ist,
- wobei die Flug- und Personendaten auf einer Anzeigefläche der Displayeinrichtung darstellbar ist.

13. System nach Anspruch 12, **dadurch gekennzeichnet, dass** die Aktivierungseinrichtung am Gepäckstück, vorzugsweise an der Displayeinrichtung, angeordnet ist.

14. System nach Anspruch 12 oder 13, **dadurch gekennzeichnet, dass** die Aktivierungseinrichtung im Inneren des Gepäckstücks angeordnet ist und manuell betätigbar ist.

15. System nach Anspruch 13 oder 14, **dadurch gekennzeichnet, dass** die Aktivierungseinrichtung ein an dem Gepäckstück, vorzugsweise der Displayeinrichtung angeordneter Knopf ist.

16. System nach Anspruch 12, **dadurch gekennzeichnet, dass** die Aktivierungseinrichtung extern von dem Gepäckstück vorgesehen ist.
